(19) Europäisches Patentamt
European Patent Office
Office européen des brevets

(11) **EP 4 474 829 A1**

(12) **EUROPEAN PATENT APPLICATION**

(43) Date of publication:
**11.12.2024 Bulletin 2024/50**

(21) Application number: **23178320.0**

(22) Date of filing: **09.06.2023**

(51) International Patent Classification (IPC):
**G01P 5/20** (2006.01)        **G01F 1/704** (2006.01)
**G01M 9/06** (2006.01)

(52) Cooperative Patent Classification (CPC):
**G01P 5/20; G01F 1/704; G01F 1/7086; G01M 9/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ETH Zurich
8092 Zurich (CH)**

(72) Inventors:
• **RUSCH, Alexander
8046 Zürich (CH)**
• **RÖSGEN, Thomas
8802 Kilchberg (CH)**

(54) **A METHOD, SYSTEM AND COMPUTER PROGRAM FOR EVENT-BASED TRACER TRACKING**

(57)    The invention relates to a method, system and computer program for determining a tracer flow in a measurement space, the method comprising the steps of:

a) Injecting tracers at a first injection region into the measurement space with a tracer seeding device configured to inject tracers at an adjustable injection region in the measurement space,

b) Recording the measurement space with two or more event-cameras, wherein each event-camera comprises a plurality of sensors configured to generate output data each time a sensor of the event camera senses a change in light intensity, wherein the output data comprises an information on a position of the sensor that sensed the change in light intensity, and a time of the change in light intensity,

c) From the data of the event-cameras, determining with a processor for at least some of the injected tracers a trajectory in the measurement space, wherein each trajectory comprises at least an information on a time-resolved three-dimensional position of the tracer, wherein the determination of the trajectories is facilitated in real time,

d) While executing steps b) and c), adjusting the injection region to at least a second injection region.

Fig. 6

Injecting tracers at an injection region

Recording measurement space with two or more event-cameras

Determining for at least some of the injected tracers a 3D-trajectory in the measurement space,

Adjusting a location of the injection region

**Description**

The invention relates to a method, a system and a computer program for event-based tracer tracking.

In the art, tracer tracking in fluids is well-known. Tracer tracking has important fields of application in fluid dynamical, particularly aerodynamic design processes in wind tunnels or the like. Also, tracer tracking has applications in monitoring circulations of fluid flow, such as airflows in rooms and outdoor environments.

Typically, a frame-based camera setup is used for recording airflows, that are for example made visible by means of smoke or fog.

Recently, event-based cameras have been exploited in this field as well. However, for facile and industrial applications the systems and methods in the art are too elaborate to set up and to execute.

An object of the present invention is to provide a method as well as a system that allows for asynchronous tracer motion detection, facile and easy-to-set-up of tracer tracking applications with real-time monitoring. The method and system are particularly suitable for very high tracer velocities in large volumetric domains.

The object is achieved by the device having the features of claim 1.

Advantageous embodiments are described in the dependent claims.

According to claim 1, a method for determining, particularly recording a tracer flow in a measurement space is disclosed, the method comprising at least the steps of:

a) Injecting tracers at a first injection region into the measurement space with at least one tracer seeding device configured to inject tracers at an adjustable injection region in the measurement space,
b) Recording the measurement space with two or more event-cameras, wherein each camera is configured to generate output data each time a sensor of the event camera senses a change in light intensity, wherein the output data comprises an information on a position of the sensor that sensed the change in light intensity, and a time of the change in light intensity,
c) From the data of the event-cameras, determining with at least one processor for at least some of the injected tracers a trajectory in the measurement space, wherein each trajectory comprises at least an information on a time-resolved three-dimensional position of the tracer, wherein the determination of the trajectories is facilitated in or close to real-time, i.e. in near real-time, particularly such that a rate of data that the processor is configured to process is on average greater or equal to a rate of data that is generated by the event-cameras, allowing a real-time processing of the data generated by the event cameras,
d) While executing steps b) and c), adjusting the injection region to at least a second injection region.

The invention allows for temporally unlimited continuous recording and generation of trajectories, while a seed region of the tracers can be adjusted during measurement. These two features allow for extremely high flexibility and speed in measuring flow profiles in the measurement space.

Advantageous applications of the method are for example in measurement spaces such as wind tunnels, or clean rooms, to track fast or slow airflows without the need of elaborate and well-defined tracer seeding conditions. The tracers may be seeded anywhere in the measurement space, and due to the real-time architecture of the method, may be positioned in response to a determined trajectory profile.

The measurement space may also be configured to allow a fluid flow such as a liquid flow.

The injection region may be associated with an injection position and/or an injection pose. The adjustment of the injection region therefore particularly relates to adjusting the injection position and/or pose. Thus, the invention allows to change during execution of the method and particularly without interrupting any of the processes the first injection region to a second injection region, which may be located and/or oriented differently than the first injection region. Alternatively, or additionally, adjusting the injection region particularly refers to a change of geometry or size of the injection region.

Typically, the tracers may be injected in a fluid flow. It is further possible to inject the tracers into a quasi-vacuum environment, such as exhaust particles of a rocket engine.

The injection region may be comprised in the measurement space. Alternatively, or additionally in case several tracer injection devices are used, the injection region may be located outside the measurement space.

The term "tracer" in the context of the current specification particularly comprises the notion of an object that may move in a fluid flow, wherein the object may not necessary move along said flow. The tracer is configured to be detected by the event-cameras. The term "event-camera" particularly comprises any asynchronous sensor device that is configured to asynchronously generate output data as laid out in previous paragraphs.

Injection of the tracers may take place using multiple injection devices at different injection regions simultaneously or serially.

The term "change of light intensity" may also referred to as a "change of temporal contrast" in the art.

The terms "real-time" and "near real-time" particularly refer to a latency between detection of an event and the processing and determination of the three-dimensional position of a tracer that may be indicated by the event. Thus, latency may be in the order of 20ms to 500 ms, particularly in the range of 50 ms to 200 ms, more particularly between 100 ms and 150 ms, while the processing and displaying of the processed 3D positions may be facilitated at a rate of no less than 15 Hz in real-time applications. Additionally, or alternatively, the terms "real-time" and "near real-time" particularly refer to a latency between a physical event taking place in the measurement space, e.g. a movement of a tracer, and the determination of the three-dimensional position or trajectory that may be in the range of 100 ms und 500 ms, particularly said latency may be smaller than one second.

Particularly, with regard to the terms "real-time" and "near real-time" it may be understood that an update rate of the method, e.g. in terms of processing cycles at a computer or processor, is faster than 100 Hz.

In some computer-systems data transfer from the event-cameras to the processor may be a limiting factor, e.g. via USB - but typically included in the notion of "real-time".

Alternatively, or in addition, the terms "real-time" and "near-real-time" may relate to a processing architecture that guarantees for each processing step a predefined processing time, such that in any case a result is produced at each processing step within said processing time, avoiding any overflow of data at a specific processing step.

The processing time may be a longest allowed latency that may be selectable by a user, another person and/or automatically e.g. based on the specs of the processing hardware.

The method allows for three-dimensional generation of trajectories of the tracers in the measurement space, which renders the method a versatile and strong asset in wind tunnels and other applications.

The method allows to generate any derived quantity from the trajectories, and/or the time-resolved 3D positions of the tracers, such as velocity, acceleration, helicity etc. The output data may further comprise an information on a polarity of the change in light intensity. The additional information on polarity allows for a more flexible determination of the trajectories, e.g. when light conditions vary.

The sensors of the camera may be arranged in an array. Particularly, the sensors comprise or consist of photosensitive pixels that each are configured to generate pixel output data comprising information on a change of intensity, a time of the change, and particularly a polarity of the change. The sensors may comprise a plurality of pixels, wherein the output data is an aggregate output data of the pixels that are comprised in the sensors. Alternatively, a single sensor may comprise a single pixel.

The method determines positions of the tracers in a time-resolved, but asynchronous fashion, which allows to determine trajectories of the tracers with a reduced data load, as compared to frame-based data.

It is further possible to determine and associate any time-derivative, such as the velocity and/or acceleration for each trajectory at any point of the trajectory, which opens a multitude of downstream evaluation applications.

Also possible is the derivation of any track-based topology information, such as curvature and/or torsion of the trajectories.

Further, the method allows for determining spatio-temporally-resolved densities of the trajectories and/or tracers.

The method allows the determination of further spatio-temporal information on single or ensembles of the trajectories in coherent flows, the spatio-temporal information may comprise a phase averaging, a non-uniform FFT and/or a modal decomposition of the trajectories.

The term "injection region" particularly refers to a region, such as point-like region, an area, or a volume from which the tracers are dispensed in the measurement space. Thus, an injection position or pose may be associated to the injection region. The injection region may also be referred to as seeding region in the context of the current specification.

The output data generated each time the sensor of the event camera senses a change in light intensity is also referred to as an event in the context of the current specification. Each event comprises the information on the position of the sensor that registered the change in light intensity as well as the time of the change in light intensity, and particularly the polarity of the change. Thus, each event may be associated to the position of the corresponding sensor and the time of the change. Each event may further be associated to the polarity of the change.

Particularly, the method is configured to synchronize the information on the time of the change in light intensity of the event cameras, such that the times associated to the events of the event-cameras may be related to a common time. The common time may be provided by a clock of one selected event-camera of the plurality of event cameras to the remaining event-cameras or by an external clock that provides the common time to all event-cameras. The common time may be provided also from an external source, e.g. in form of an electric or optical timing signal, particularly wherein the optical timing signal may be provided by a light source arranged in the measurement space. Wherein the term "light" source particularly comprises the notion of a reflection of a light signal. According to another embodiment of the invention, at least some of the determined trajectories are stored on a non-transitory storage medium.

This embodiment allows for the generation of comparably small data volumes as compared to frame-based/synchronous methods, as regardless of frame content all data must be stored. According to the invention, only changes in the scenery may be registered by the event-cameras, which dramatically reduces an amount of data generated per time unit. According to the invention, this embodiment allows storing data of hourlong experiments as compared to frame-based systems that are based on synchronous recording/high speed recording of full frames.

This allows for post-processing and evaluation of the recorded data.

According to another embodiment of the invention, at least some of the determined trajectories are displayed on a display, particularly while steps b) to c) and/or d) are executed.

Displaying the trajectories and/or derived quantities allows for instant evaluation by an operator, such that for example the injection region may be adjusted accordingly. According to another embodiment of the invention, each trajectory has an associated generation time, wherein displayed trajectories having a generation time that is older than a selected time, are deleted from the display, such that a temporal evolution of the trajectories is displayed.

This embodiment allows for selecting, sorting and filtering for trajectories in dependence of their time of generation. The generation time may be the time at which the trajectory starts, i.e. when the tracer has been identified for the first time by the processor.

This embodiment prevents data overflow in display and processing pipelines.

According to another embodiment of the invention, the adjustment of the injection region is associated with an adjustment time that is provided to the processor, particularly such that tracers and trajectories are associated to the adjustment time, particularly wherein the adjustment time is stored on the non-transitory storage medium for associating the adjustment time to the trajectories.

This embodiment allows for selecting, sorting and filtering for trajectories in dependence of the injection region, allowing for example to generate separate sets of trajectories for display. Further, projection planes, isosurfaces, trajectory bundles, streamlines derived from trajectory data, may be displayed and selected in a similar fashion.

Trajectory data particularly comprises the information on the trajectories in digital form. According to another embodiment of the invention, the injection region is adjusted repeatedly, particularly a location of the injection region is adjusted repeatedly.

This embodiment allows for any desired sampling quality of the measurement space and the trajectories therein.

Methods known in the art are static and no movement of the injection region is present. According to another embodiment of the invention, the at least one tracer seeding device comprises at least one injection nozzle from which the tracers are injected in to the measurement space, wherein at least the injection nozzle or the seeding device is handheld and/or hand-guided, such that the injection region is adjustable by moving the nozzle(s) by hand to another region of the measurement space.

This embodiment allows for freely choosing the injection region, while the person holding the nozzle in position can determine which region of the measurement space is to be sampled by the tracers.

It is important to note that it is not important that the person holds the nozzle still, but the person may wave the nozzle arbitrarily. The nozzle may be configured to provide point-like injection regions, or sheet-like injections regions or other shaped injection regions.

According to another embodiment of the invention, the at least one tracer seeding device comprises at least one injection nozzle from which the tracers are injected in to the measurement space, wherein at least the injection nozzle or the seeding device is a robotic device, that is configured to be controlled via a control-computer or by an operator, wherein the robotic device is configured to move the one or more nozzle(s) to another region of the measurement space. The robotic device may be operated by an operator located outside the measurement space.

According to another embodiment of the invention, the tracer seeding device comprises an injection nozzle at which the tracers are injected in to the measurement space, wherein the injection seeding device is configured to move the nozzle computer-controlled, particularly wherein the tracer seeding device is connected to a control-computer, wherein the control-computer issues control instructions to the tracer seeding device causing the device to move the nozzle.

The processor and the control-computer may be different and independently operating entities, but may also be comprised in the same computing device.

This embodiment allows for an automatic and computer-controlled sampling of the measurement space and the trajectories therein. This allows for sampling for example an airflow over an object at a predefined or selectable trajectory density. Particularly, it allows to perform measurements in dependency of a quality metric, such as a variance of a flow quantity, data fluctuations, and/or a convergence of data averages.

According to another embodiment of the invention, the nozzle is moved along a predefined pattern, such that the injection regions are adjusted according to the predefined pattern.

According to another embodiment of the invention, a density of trajectories is determined by the processor for one or more sub-volumes in the measurement space. This allows for generating data sets having a predefined trajectory density, which allows for example comparison to simulation results and grants a predefined sampling density of the trajectory space.

The term "sub-volume" particularly relates to a volume comprised in the measurement space. The sub-volume size may range between cubic millimeters up to cubic meters. According to another embodiment of the invention, the density for the one or more sub-volumes is displayed.

This allows for interactive adjusting the injection region if necessary.

According to another embodiment of the invention, in case the density in a sub-volume of the one or more sub-volumes is below a selected threshold value, the method displays a visual indication of said sub-volume to a user of the method.

This allows for guided and interactive adjustment of the injection region e.g. by an operator.

According to another embodiment of the invention, the injection region is adjusted such that the density in the one or more sub-volumes is equal or above a selected density for the one or more sub-volumes, particularly wherein the tracer seeding device is configured to receive control instructions from the control-computer causing the tracer seeding device to move the nozzle to adjust the density of the trajectories in the one or more sub-volumes.

This embodiment allows for an automated and computer-controlled generation and sampling of the measurement space. This in turn reduces recording times. According to another embodiment of the invention, the tracers comprise one or more of the group consisting of:

- bubbles,

- droplets,

- particles.

As can be seen a broad variety of tracers may be used with the method. Depending on the application, different tracers may be used. It is possible to use mixtures of tracers, e.g. bubbles and droplets. Droplets comprise a liquid, wherein bubbles comprise a gas in a liquid shell.

Particles may be soft or hard particles, such as sand, ice, snowflakes, pebbles, dry-ice particles, or gel particles.

Tracers do not have to follow a fluid flow in the measurement space.

Tracers may comprise a label or a marker, such as a luminescent probe to enable selective detection by the event-cameras.

According to another embodiment of the invention, the measurement space is comprised in or is a wind tunnel, wherein the wind tunnel comprises a wind-generating device.

The measurement space may comprise or may be adjacent to an array of flow-generating devices.

This embodiment allows flexible and rapid testing of aerodynamic properties of objects arranged in the wind tunnel.

According to another embodiment of the invention, the tracers are injected into a flow, such as an airflow flowing through the measurement space.

The flow may also be a liquid or any fluid flow. The tracers may be selected according to the application.

According to another embodiment of the invention, the tracers comprise or consist of bubbles or droplets comprising a fluid, such as a gas that renders the bubbles neutrally buoyant, particularly such that the bubbles float in the measurement space.

Such fluid may comprise Helium in case the tracers are bubbles.

Alternatively, the tracers may be droplets comprising an immiscible liquid for a surrounding liquid, or density-matched solid particles.

According to another embodiment of the invention, the tracers comprise or consist of bubbles filled with air, particularly wherein a flow speed of an air flow in which the tracers are injected is higher than 50 km/h at least at the injection region in the measurement space.

This allows using tracers that are not neutrally buoyant but very cost efficient, as compared to helium filled tracer bubbles. In case the flow speeds are high enough, gravity distortion of the trajectories is only marginal and neglectable.

It is noted that the method is capable of recording tracers at virtually any velocity due to the advantageous properties of event-cameras.

According to another embodiment of the invention, the flow speed is higher than 30 km/h, particularly higher than 50 km/h, more particularly higher than 80 km/h particularly at the injection region. Such flow speeds are hardly recordable over a longer period with frame-based systems, as the amount of data to be processed becomes too large (due to the necessary increased frame rate).

According to another embodiment of the invention, the tracers comprise multiple concurrent species of tracers selected from the group consisting of:

- tracers in form of liquid droplets and tracers in form of bubbles,
- tracers in form of liquid droplets and tracers in form of solid particles,
- tracers in form of bubbles and tracers in form of solid particles,
- tracers in form of liquid droplets, tracers in form of bubbles, and tracers in form of solid particles.

Particularly, in settings, having tracers in the form of bubbles and tracers in form of solid particles, it may be possible to observe and evaluate a stream or flow by determining the trajectories of the bubbles, wherein other properties may be observed by determining trajectories of the solid particles that may not strictly follow the flow but the trajectories of which are defined by other factors.

According to another embodiment of the invention, the tracers are luminescent, particularly fluorescent.

This embodiment allows for better and/or selected detection of the tracers.

According to another embodiment of the invention, from the data of each event-camera a two-dimensional time-resolved location of the tracers in the measurement space is determined by the processor, wherein from the plurality of two-dimensional locations of each tracer, and particularly by evaluating a temporal coincidence of the plurality of two-dimensional positions of each tracer, a three-dimensional position of each tracer is determined, particularly by means of a photogrammetry-method.

Determining a three-dimensional position based on data of the event-cameras is more complex as compared to frame-based cameras, as in order to merge information of two-dimensional positions, it is necessary to first establish a temporal coincidence, i.e. assign recorded events to the same or a different tracer. In this regard, determining a three-dimensional position of the tracers differs immensely from the well-known photogrammetry-methods known in the art that relate to frame-based camera data. Particularly, from the three-dimensional position of the tracers the three-dimensional trajectories are determined.

According to another embodiment of the invention, the data of the event-cameras are generated asynchronously, particularly such that a data load on the processor is reduced as compared to methods based on frame-based cameras.

According to another embodiment of the invention, an object is arranged in the measurement space, wherein trajectories of tracers flowing around the object are determined by the method.

This embodiment allows for characterizing aerodynamic properties of the object, particularly in case the measurement space is a wind tunnel.

According to another embodiment of the invention, the object adjusts its geometry, position, pose and/or an aerodynamic characteristic during the recording step b). This allows for testing aerodynamic properties of the object at various states of geometries in real-time. It furthermore enables fast configuration changes of the object - even in the measurement space.

According to another embodiment of the invention, before step a) is executed, the object is registered relative to the event-cameras, particularly wherein the object is registered by selectively illuminating, particularly with a light spot, light spots and/or a pattern or cloud of separated light spots different portions of the object, wherein the event cameras record the illumination portions, wherein the processor determines the three-dimensional positions of the illuminated portions.

This embodiment is based in essence on the same evaluation of the recorded data as the recording and determination of the trajectories and allows for facile and quick registration of the object in the measurement space. Registration particularly comprises determining a pose in the measurement space.

According to another embodiment of the invention, a 3D-model, such as a CAD-representation of the object is provided to the processor, wherein the processor registers a pose of the 3D-model relative to a representation of the measurement space by processing the illuminated portions.

This embodiment allows to precisely register the object with a 3D-model and to display the trajectories relative to the 3D-representation.

According to another embodiment of the invention, from the three-dimensional positions of the illuminated portions a three-dimensional representation of the object in the measurement space is generated.

This embodiment allows the reconstruction of a virtual representation of the object, such that for example no CAD model may be necessary in order to display the trajectories together with the representation of the object.

According to another embodiment of the invention, an analytical path or analytical path segments is/are fitted to the trajectories such that the trajectories may be expressed and represented as the analytical path or path segments.

The analytical path may be expressed as polynomial function, B-splines NURBS etc.. This allows for data and noise reduction for the trajectories.

According to a second aspect of the invention, a system configured to execute the method according to one of the preceding embodiments is disclosed, wherein the system comprises at least the following components:

- A processor,

- Two or more event cameras arranged at different positions, wherein the cameras are connected to the processor such as to provide event-data, particularly wherein the event-data comprises the information as laid in the embodiments relating to the method,

- One or more tracer seeding devices, wherein each tracer seeding device is configured and arranged to inject tracers into a measurement space,

characterized in that each tracer seeding device is configured and arranged to subsequently inject the tracers in at least a first and a second injection region, particularly a plurality of injection regions.

Particularly, the injection regions are at different locations in space and/or may not overlap.

The system allows for a flexible and efficient recording of tracer data.

It is noted that definitions, features and/or embodiments relating to the method, relate to the system in the analogue fashion and vice versa.

For example, the system is configured to process the data in real-time, particularly by having the processor configured and adapted to process data at rates that are greater or equal to the rate of data generated and transmitted to the processor from the event-cameras. This feature has been elaborated in the context of the method and applies in the same manner to the system.

According to another embodiment of the second aspect and the invention, each tracer seeding device comprises one or more nozzles at which the tracers are ejected from each tracer seeding device, wherein at least said nozzle is movable between the first and the second injection position, particularly in a plurality of injection positions. According to another embodiment of the second aspect of the invention, the at least one tracer seeding device is connected to the control-computer, wherein the control-computer is configured to issue control instructions to the tracer seeding device, causing the tracer seeding device to adjust the injection region and/or the injection rate of tracers according to the control instructions.

According to another embodiment of the invention, the tracer seeding device or at least the one or more nozzles are handheld and/or hand-guided, such that a person using the tracer seeding device may adjust the injection region by moving the one or more nozzles.

According to another embodiment of the invention, the system further comprises a calibration rig configured to determine a relative position, pose and/or optical imaging parameters of the event-cameras, particularly wherein the calibration rig is an omnidirectional and/or active calibration rig.

The term "omnidirectional" particularly refers to the property of the rig that the rig and particularly its calibration features are visible for the event-cameras from any viewing direction.

According to another embodiment of the invention, the system further comprises an optical marker and/or a designation device to selectively illuminate surface points on objects arranged in a measurement space for spatial registration of the object. According to a third aspect of the invention, a computer program is disclosed, wherein the computer program comprises computer program code, that when executed on the processor or a computer with the processor, executes at least the computer-executable method steps of the method, particularly wherein the computer program is configured to cause a control computer to issue control instructions sent to the tracer seeding device causing the tracer seeding device to move the injection region according to the instructions.

Particularly, the computer program may be configured to control the event-cameras via interfaces with the processor or computer, particularly a characteristic, such as a bias and/or a region of interest of the event-cameras.

Further, the computer program may be configured to select one of the event cameras to be the camera providing the common time to the remaining event-cameras.

The computer program may be stored on a non-transitory storage medium.

The computer program may be further configured to display the at least some of determined trajectories of the tracers on a display to which the processor is connected.

According to another embodiment of the invention, the computer program comprises a 3D-visualization module, wherein the 3D-visualization module is configured to render a 3D-representation of the trajectories and/or the object on the display, wherein the computer program is further configured to receive a user input causing the 3D-visualization module to interactively render the trajectories under an adjusted viewing angle, viewing position or zoom factor.

The user input may be provided via a 3D-control-interface, such as a 3D-mouse for the user.

The term "processor" and computer may be used interchangeably in the context of the current specification.

The processor may be comprised by a computer. The computer may comprise a non-transitory storage medium for storing data. The processor may be distributed on a plurality of sub-processors working cooperatively to execute the tasks for the processor. Further, the term "computer" particularly includes the notion of a distributed computing architecture and/or conventional PCs.

The terms "processor" or "computer", or system thereof, are used herein as ordinary context of the art, such as a general-purpose processor or a microprocessor, RISC processor, or DSP, possibly comprising additional elements such as memory or communication ports. Optionally or additionally, the terms 'processor' or 'computer' or derivatives thereof denote an apparatus that is capable of carrying out a provided or an incorporated program and/or is capable of controlling and/or accessing data storage apparatus and/or other apparatus such as input and output ports. The terms 'processor' or 'computer' denote also a plurality of processors or computers connected, and/or linked and/or otherwise communicating, possibly sharing one or more other resources such as a memory.

As used herein, the terms 'server' or 'client' or 'backend' denotes a computerized device providing data and/or operational service or services to one or more other computerized devices or computers.

The terms 'software', 'program', 'software procedure' or 'procedure' or 'software code' or 'code' or 'application' or 'app' may be used interchangeably according to the context thereof, and denote one or more instructions or directives or circuitry for performing a sequence of operations that generally represent an algorithm and/or other process or method. The program is stored in or on a medium such as RAM, ROM, or disk, or embedded in a circuitry accessible and executable by an apparatus such as a processor or other circuitry.

The processor and program may constitute the same apparatus, at least partially, such as an array of electronic gates, such as FPGA or ASIC, designed to perform a programmed sequence of operations, optionally comprising or linked with a processor or other circuitry.

As used herein, without limiting, a module represents a part of a system, such as a part of a program operating or interacting with one or more other parts on the same unit or on a different unit, or an electronic component or assembly for interacting with one or more other components.

As used herein, without limiting, a process represents a collection of operations for achieving a certain objective or an outcome.

Exemplary embodiments

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

Event-Cameras

Event-based sensors or silicon retinae, referred to as event-cameras in the context of the current specification, operate fundamentally differently from conventional frame-based cameras in the way visual stimuli are sensed, and in the way the data is read out from the sensor to be subsequently transmitted to a host computer or storage device.

As opposed to a (global shutter) framing camera, event-cameras do not capture a visual scene by "reading out" all photosensitive pixels/sensors simultaneously at fixed time intervals ("frame rate"). Neither do the pixels/sensors provide information about the absolute lighting level ("intensity"). Instead, each pixel/sensor operates independently from the others and outputs information based on its individual, relative illumination change. That is, pixels/sensors that are not exposed to a changing stimulus idle (and thus do not generate an output signal), whereas pixels/sensors sensing a change in intensity output information at a rate appropriate to account for the local scene content change. Each pixel/sensor in the sensor array of the event-camera is independent of the other pixels/sensors and outputs spikes asynchronously when it detects a change in light intensity that exceeds a predefined threshold. The data output is simply a notification, called event, declaring that a threshold-crossing brightness change has been sensed at the single-pixel/single-sensor level. This event carries a polarity indicating an increase (ON event) or decrease (OFF event) of the sensed light intensity relative to the level at which the pixel/sensor last fired.

This information is complemented by the pixel/sensor position in the sensor array (x- and y-coordinates) and the timestamp of the event's occurrence, in the context of the current specification also referred to as time of the change of light intensity. Thus, events can be described by the four-tuple

$$e_i = (t_i,\ x_i,\ y_i,\ p_i),$$

where $t_i$ denotes the timestamp, $x_i$ and $y_i$ the pixel coordinates, and $p_i$ the binary polarity of the i-th event.

Neglecting the details of sensor readout, arbitration and data transfer for now, as a first approximation, the output of an event camera is a strictly consecutive and asynchronous stream of events. Since the pixels of the event-camera only fire, i.e. generate an output signal, when they detect a change in light intensity, the data rate of the event-camera automatically adapts to the dynamics of the observed scene. This pixel behavior also results in an intrinsic suppression of static background without explicit computational effort. While each event carries much less information than an intensity frame from a conventional camera, event-cameras can output several million or even billion events per second at a typical pixel latency of 200-1000 $\mu$s, dependent on the lighting conditions. Furthermore, the output information is reduced solely to the visual trace of dynamic stimuli appearing in the scene (plus noise).

Synchronizing the event-cameras to the same time:

In order to fuse the output data of multiple event-cameras, camera synchronization is necessary. The temporal coherence of events across all event-cameras should be established, as this allows to fully exploit the high temporal resolution of event-cameras for tracer tracking and reconstruction.

For this purpose, it is possible to make use of a master-slave scheme for clock synchronization between the event-cameras. In such a setup, a single master event-camera provides its own clock (or a synchronization signal thereof) to one or multiple slave event-cameras. The latter either directly use the clock signal of the master or resynchronize their clocks appropriately. The synchronization mode is typically set via the camera's driver software. Connection topologies include star-shaped networks, where the master is central, and daisy-chain configurations, in which a single slave directly connects to the master, and each additional slave connects to its preceding peer.

Gas-filled soap bubbles as tracers:

An ideal tracer for experimental flow investigation should

- be perfectly advected/have low inertia,

- be neutrally buoyant with respect to the ambient fluid (no drift motion),

- be small enough to resolve the targeted flow structures,

- have a strong optical signature such that it is easily detected,

- have a long enough lifetime to survive the transport through the test volume

- be easy and cost-effective to produce,

- be non-hazardous,

- leave as little residue as possible.

Gas-filled soap bubbles meet these criteria and may therefore be used as tracers. Particularly the gas may comprise helium to the amount that neutral buoyancy is achieved.

Particularly the tracer seeding device may comprise a bubble generator adapted to produce bubbles

- in the range of approximately 0.5 to 3mm diameter,

- that are approximately neutrally buoyant,

- that have a lifetime $\geq 10$ s,

- and are produced at a generation rate greater than 10 Hz, and smaller than 1000 Hz.

Registration of the measurement system:

Registration of the measurement system defines the relation between a scene in the measurement space and the event cameras. Additionally, during execution and operation of the method and the system according to the invention, the relative orientation and positioning of the event-cameras with respect to each other should be determined. Mathematical details of camera registration are known to the person skilled in the art. Registration require samples of a known geometric configuration as input. This is typically achieved by means of a calibration target/rig. Precisely printed, high-contrast 2D checkerboard or dot patterns may be used for calibrating frame-based cameras. The corners or dot centers of the pattern are known in world space and serve as geometric features in the calibration procedure. However, a regular, non-moving, passively illuminated pattern cannot be used to register event-cameras, due to their dynamic operation principle. This problem can be overcome by moving the target in front of the cameras (or the other way around). Another possibility is to illuminate the target dynamically. Particularly, if the target itself intermittently or varyingly emits the light at predefined portions, global event clutter is avoided while the geometric features of the target are captured. Such a configuration may be referred to as an active calibration target in the context of the current specification. An active calibration target has the advantage that the calibration pattern may be detected by the event-cameras even if the target is not moving. Furthermore, the contrast of the feature points, i.e. the actively emitting portions of the target, is particularly high, independent of the lighting conditions. This allows for robust feature point detection even under challenging conditions. There are multiple ways to create an active target. It is possible to use a flickering or flashing computer/tablet screen displaying the calibration pattern or a custom-made device built with LEDs that are intensity modulated. A battery- or mains-operated, light-weight, precisely manufactured calibration target with a plurality of blinking LEDs may be used as an active calibration target.

Short description of the Figures

Fig. 1    shows a flow chart of an embodiment of the invention;
Fig. 2    shows trajectories recorded of an airstream of an air purifier using the method according to the invention
Fig. 3    show streamlines of the experiment depicted in Fig. 2;
Fig. 4    shows trajectories recorded of a jet model exposed to an air flow using the method according to the invention
Fig. 5    show streamlines of the experiment depicted in Fig. 4; and
Fig. 6    shows a flow chart of another embodiment of the invention.

Details of the Data Processing:

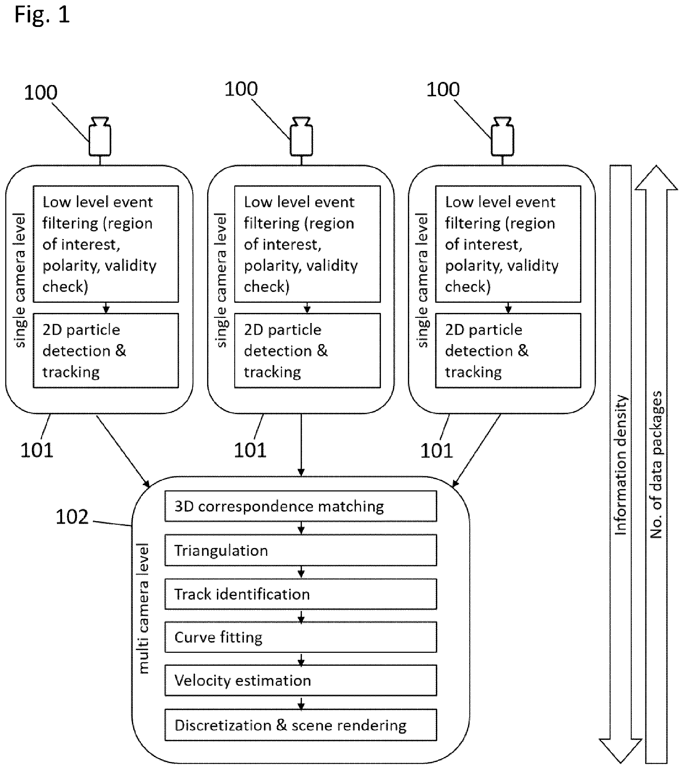

In reference to Fig. 1, the method is illustrated. The method according to one exemplary embodiment comprises several incremental processing stages that are interconnected in a sequential chain/pipeline.

At each step, the incoming incremental data is processed - for instance, filtered, transformed, or fused - to yield a resulting output data package containing more information than the input data. Each processing step has one or several associated worker threads such that the pipeline stages process data concurrently, even though each single event passes through the pipeline stages sequentially. Thread synchronization mechanisms and first in, first out (FIFO) buffers connect the individual stages and enable the fully asynchronous processing of the data. Fig. 1 depicts the computational pipeline of the measurement system for an exemplary number of three event-cameras 100 (more cameras are possible). The processing pipeline begins with the raw event streams being transferred to the host computer 101 from the event-cameras 100.

The first computational steps, such as low-level event filtering, are performed on a "per-camera" basis so as to allow the cameras to operate independently from each other. In general, the experimental conditions and sensor-specific differences (for example manufacturing variations) cause a certain asymmetry in the event data streams across multiple synchronized event-cameras 100. For instance, if one of the event cameras 100 is located closer to the test volume, i.e. the measurement space or object, projections of the tracer particles cover larger areas of the event-camera sensor as compared to an event-camera that observes the scene from further away. Consequently, the "close-up camera" is likely to exhibit a higher event rate. Coupling the individual event-cameras' event streams too early could choke the processing pipeline of single cameras and quickly fill up the associated data buffers. The incoming events are filtered by considering conditions such as the conformity with a configurable ROI or temporal consistency (monotonically increasing times of the events). Any events failing these checks are dropped and not propagated to the subsequent processing stage. Next in line is a 2D detection and tracking algorithm, which identifies tracers, particularly the tracer particles in the event stream and tracks their coherent motion in the spatiotemporal domain. The output of this stage are incremental 2D position changes of the trackers associated with the detected tracer particles. Note that this processing stage severely reduces the number of data packages in the pipelines while at the same time enriching the information density significantly. Effectively, it fulfils two functions: First, it acts as a filter sorting out all events that appear to have no relation with the physically present tracers. Second, it clusters the remaining events and provides them with semantical meaning as the history of events assigned to the same tracer encodes the motion of that object. The 2D detection step may be executed on the event-camera's processor 101 as well, as depicted in this example.

During execution of the method, multiple event-cameras 100 observe the same measurement space such that the motion of a tracer generates corresponding incremental tracker changes in the multiple event-cameras' processing pipelines. Due to occlusions or other loss of signal, this may not always hold true. But for now, we simplify the situation and assume that the motion of a particle or tracer can, indeed, be seen by multiple event-cameras simultaneously. Thus, the next algorithmic step needs to fuse the as-of-yet independently progressing pipelines to perform correspondence matching. To do so, the event-cameras 100, as well as the multi-camera system as a whole, need to be calibrated or registered as elaborated in a previous paragraph. The photogrammetric calibration is performed with event-based data instead of classical image frames. Once corresponding incremental tracker position changes are identified across multiple camera views, the tracer motion steps are reconstructed in 3D via triangulation. This stage yields, again, a form of event-based data. However, the data are now discrete four-dimensional (4D) points, that is, incremental timestamped 3D tracer position updates. The reconstructions are as of yet unrelated. Ultimately, however, a streak-based representation of the data is preferred. Therefore, the next computational step associates coherent occurrences of such 4D reconstructions with each other to represent discrete positions along the path line of a single tracer. Due to spatial and temporal inaccuracies, the track-associated 4D reconstructions are noisy. Trying to extract the local tracer velocity directly from subsequent reconstructions may yield unphysical results as the differentiation on noisy positional data is problematic - even more so for higher-order temporal derivatives. Thus, a processing step is added in the pipeline that fits a 3D curve through the track-associated reconstructions. It is recursively and asynchronously updated with each newly arriving and associated reconstruction. The curve fitting has two advantages: The tracer path line/streak is now described in closed analytical form. Furthermore, the smoothing character of the curve fitting and the analytical path line representation enable the direct evaluation of temporal derivates such as velocity and acceleration, which are, in turn, given in closed analytical form. Before the acquired streak data can be visualized, the curve representation is discretized regularly. Finally, the latest streak data may be rendered in an immersive virtual 3D scene of the measurement space on a display. Starting with the 3D correspondence matching step, the method may be executed on a common and shared processor 102, and particularly not on the individual event camera level. Step 102 may as well be executed in a different topology where, indeed, on the individual camera level a "voting mechanism" allows for 3D reconstruction without a central processing unit.

2D tracer detection and tracking

Event-cameras 100 provide the advantage that the asynchronous and independent operation of the sensors, e.g. pixels eliminates any motion blur of tracers. Finally, the data rate of event-cameras is low enough to enable continuous streaming of the output to a host. Therefore, recording/observation durations are virtually unlimited.

An exemplary tracking algorithm is presented in the following. The algorithm is intended and tailored for flow tracer tracking.

The advantages of event-cameras for tracking applications are obvious and many such algorithms already exist for diverse applications. Even though the method makes use of a multi-camera system, the 2D detection and tracking is performed independently for all event-cameras.

The method according to the invention may use a setup comparable to a motion capture system. That is, the event-cameras are stationary, and moving tracers are observed. Due to the lack of ego-motion, the event-cameras generate only few events that stem from the cluttered scene background. This keeps the event rate limited and ensures that the event-encoded information almost exclusively corresponds to the motion of the objects of interest - the tracers.

Exemplary Embodiment of the tracking algorithm:

From a black-box perspective, the 2D tracer detection and tracking algorithm can be described as follows: Input to the algorithm are the raw pixelated events as streamed from the camera. While processing, this algorithmic stage asynchronously dispatches the sub-pixel accurate, event-based, incremental motion changes of the trackers. As such, the tracking filters out non-motion related "clutter" events and condenses the remaining events in a semantic form: Trackers are directly associated to individual moving tracer particles. The tracking algorithm is a cluster- or "blob"-based approach. An ensemble of recent and spatio-temporally coherent events contributes to the extent and position of the corresponding tracker. Algorithm 1 outlines the tracking procedure in pseudo-code. It is noteworthy that Line 2 describes the asynchronous and event-based behavior of the algorithm (in a simplified fashion): Data processing is only triggered when an event arrives at the tracking stage. Otherwise, no changes are made to the states of the trackers. During the initial run of the algorithm (first execution after the camera is started), counters and timers needed for performance evaluations and real-time checks are reset or started, respectively. Next, the validity of the event timestamp needs to be checked, as the slave cameras in a hardware-synchronized multi-camera setup may send invalid and/or zero-valued timestamps before the clock of the master camera is received. In general, there is a delay

---

**Algorithm 1** Pseudo-code of 2D tracer detection and tracking in Track-AER.

---

```
 1: while not stop do
 2:     wait for event to process;
 3:     if initial run then
 4:         reset counters and timers;
 5:     if event timestamp < 1 then
 6:         continue;
 7:     if now() − start > event timestamp + delay then
 8:         continue;
 9:     event counter++;
10:     prune trackers;
11:     update heat map;
12:     try assigning event to existing trackers;
13:     if not event added to existing tracker then
14:         try creating new tracker;
15:     else
16:         if event added to multiple trackers then
17:             merge respective trackers;
18:         forward incremental tracker change;
```

---

of possibly several milliseconds between the algorithm's start time and the actual zero reference of the camera clock. For correct real-time behavior, it is essential to eliminate this discrepancy. The corresponding temporal offset is used in each real-time check (in Line 7 of Algorithm 1). If the tracking algorithm lags behind the physical time, single events are skipped. The tracking algorithm is designed to compensate for this occasional elimination of single events. A critical level is only reached when the camera's average event rate constantly exceeds the algorithm's throughput. In such a situation, significant numbers of events would be skipped, leaving insufficiently dense data to process for the tracking algorithm. This extreme situation is easily identifiable in a 2D view as all trackers would disappear instantly. The problem can then be solved by adapting the tracking algorithm parameters toward "lighter computation" by adjusting the camera biases such that a lower event rate is achieved, or by reducing the seeding density. No exact upper limit regarding the event throughput can be specified at this point because such a limit is highly dependent on the scene conditions: Camera biases and lighting conditions need to be adapted, first and foremost, to yield a good event signature of the HFSBs (helium-filled soap bubbles) - not for optimum algorithmic performance. However, this also directly influences the event rate, as well as the noise levels of the camera, which in turn affect the tracking algorithm. In Line 10 the actual detection and tracking process starts, which generally consists of the following subtasks:

1. Pruning and deletion of trackers.

2. Spawning of new trackers.

3. Association of new data to existing trackers.

4. Positional update of trackers.

5. Merging of trackers.

Upon the arrival of a new event, the pruning of existing trackers is triggered. That is, based on an age criterion (see below), the oldest/earliest events (having the smallest timestamps) belonging to a tracker are deleted from the list of contributing events and the tracker is updated accordingly. If the number of events making up a specific tracker falls below a user-defined threshold, that tracker is deleted from the list of active entities, marking the "end of life" of the tracker.

After the 2D tracer detection and tracking step, the independent processing pipelines of the different cameras need to be fused such that the tracer positions can be reconstructed in 3D by triangulation. However, the asynchronous streams of positional changes of particle trackers from multiple cameras are not co-registered. Finding the association between 2D points - in this case, tracker updates - from multiple, distinct camera views is known as the correspondence problem, which is known in the art and has been solved e.g. by exploiting the epipolar geometry of the event-cameras.

Once two corresponding trackers are identified, the respective 3D tracer position can be reconstructed.

At this stage, the camera-individual processing pipelines are merged such that candidate matching between tracker updates from multiple views is possible. The tracker updates arrive in camera-individual buffers, and each buffer only contains trackers that span a maximum temporal window of prescribed and user-definable size. The cut-off timestamp is calculated by counting backward from the globally latest tracker update. In the spirit of event-based processing, the cut-off timestamp is reevaluated for each incoming tracker update, and the buffers are pruned accordingly. The use of a finite-sized temporal window is crucial as corresponding tracker updates generally do not carry identical timestamps. This is mainly due to two reasons:

First, depending on the arrangement of the cameras relative to the measurement scene, the motion of a single tracer may trigger more events and, therefore, more frequent tracker updates in one view than in another. For instance, a particle may move perpendicular to one camera but at a strongly pointed angle to the other. This asymmetry is a minor temporal discrepancy factor, though. Much more critically, the pixel and readout jitter of the event-cameras yield an uncertainty in the event timestamps across multiple cameras even though the event-cameras are hardware synchronized. The choice of the temporal window size is also crucial for the performance of the reconstruction algorithm as it defines the computational cost of searching for pair-wise corresponding tracker updates. If the window is too small, only few correspondences can be found across multiple camera views. If it is too large, the correspondence search becomes exhaustive, and the algorithm's real-time performance is at risk. An experimentally determined size of 100-500 $\mu$s is a good trade-off, keeping the search effort reasonable, while timestamp mismatches of corresponding trackers are respected in most cases. The use of a temporal window also simplifies the correspondence search and reconstruction, as from thereon, only geometric conditions are necessary to determine matches. All candidates are automatically guaranteed to fulfil the temporal consistency requirements, and no explicit check involving the timestamps needs to be performed once geometric matches are found.

After triangulation, the 3D points are given in the coordinate system of the camera, whose buffer has been chosen as reference. The points are transformed into a common world coordinate frame. Each reconstruction is assigned the average of the timestamps of the tracker updates from which the triangulated point originated. Note that the result of this processing stage is, again, a form of event data. The 4D event (x, y, z-coordinates, and timestamp) is pushed to the next algorithmic stage in the processing pipeline, and the order of the 4D events as given by their timestamps is respected during dispatching. Note that the assignment of the timestamp after reconstruction may be critical: The temporal increments of the 4D reconstructions are required to obtain velocity information (or other temporal derivates) from the final tracer path lines.

3D Track Identification

The result of the correspondence matching and triangulation stage is a (dynamically evolving) point cloud of discrete 4D events representing a discretized form of the tracer path lines in the physical scenery. However, these incremental position changes are not yet registered as belonging to specific tracers. Similarly to the 2D particle detection and tracking stage, the task of the track identification algorithm is to detect spatio-temporally coherent accumulations of 4D events that make up the signature of a tracer particle. The reconstructions shall be clustered into groups to which unique IDs can be assigned. As before, the track identification algorithm is implemented in an event-based fashion. Thus, upon the arrival of each new reconstruction from the preceding step of the processing pipeline, this algorithm is triggered. When no reconstructions are forwarded, the algorithm idles. Even though the spatio-temporal constraints for tracking and reconstruction in the preceding processing steps have been rather strict, some noise propagates to this pipeline stage which needs to be filtered out. However, in contrast to the 2D detection and tracking stage, the 4D events are much sparser and, consequently, the requirements on spatio-temporal continuity cannot be as strict as before. As such, this stage shall also bridge small gaps in the reconstruction data that may result from occlusions, loss of signal (for instance, due to strongly reflective background patches) or data that have been skipped due to real-time restrictions.

Upon the arrival of a new reconstruction, three mutually exclusive processes are triggered. In the following, they are ordered by their priorities (high to low):

1. The reconstruction is assigned to an existing track.

2. The reconstruction triggers the initialization of a new track.

3. The reconstruction is registered for the potential future creation of a new track.

Existing tracks are kept in an incomplete/waiting state as long as new reconstructions are frequently added to them. If a track is not updated within a user-definable timeout interval, the track is completed and removed from the list of assignment candidates. An incomplete track may be updated by an incoming reconstruction if the latter represents a spatio-temporally consistent incremental change.

### Fitting an analytical path to each of the trajectories

Now that individual reconstructions are identified as discrete points along the track of a tracer, the continuous motion of the particle can be reconstructed. However, simply interconnecting the time series of incremental positional changes to yield the particle's path is insufficient due to the spatial noise in the data. Instead, each time-resolved 3D-track (also referred to as trajectory in the context of the current specification) is approximated with a 3D polynomial curve smoothing the particle path in a least-squares sense. The trajectories may alternatively or in addition be approximated using B-splines, NURBS or similar functions. The fitting is performed recursively such that the curve representation is updated upon the addition of each new 4D event. This "per-event" update of the curve representation conforms well with our event-based processing strategy. Furthermore, each update is computed in constant time such that the algorithm is well-suited for deployment in a real-time restricted system. The procedure applied in this context is known as recursive least squares (RLS) algorithm and represents an adaptive filtering technique.

### Velocity Estimation

Once the particle track is approximated, an analytical representation of the tracer path is available. The corresponding velocity estimation is readily retrieved by differentiating the path line (or path or path segment) with respect to time. As the path may be described as a polynomial (i.e. a sum), differentiation is a computationally inexpensive task and can be executed very efficiently and in real-time.

Notably, again, the computations can be carried out in parallel and constant time. The particle acceleration can be computed in succession to the velocity estimation and use the latter as an initial point of the calculation.

Alternatively, or additionally, the acceleration estimation can even be performed in parallel to the velocity estimation.

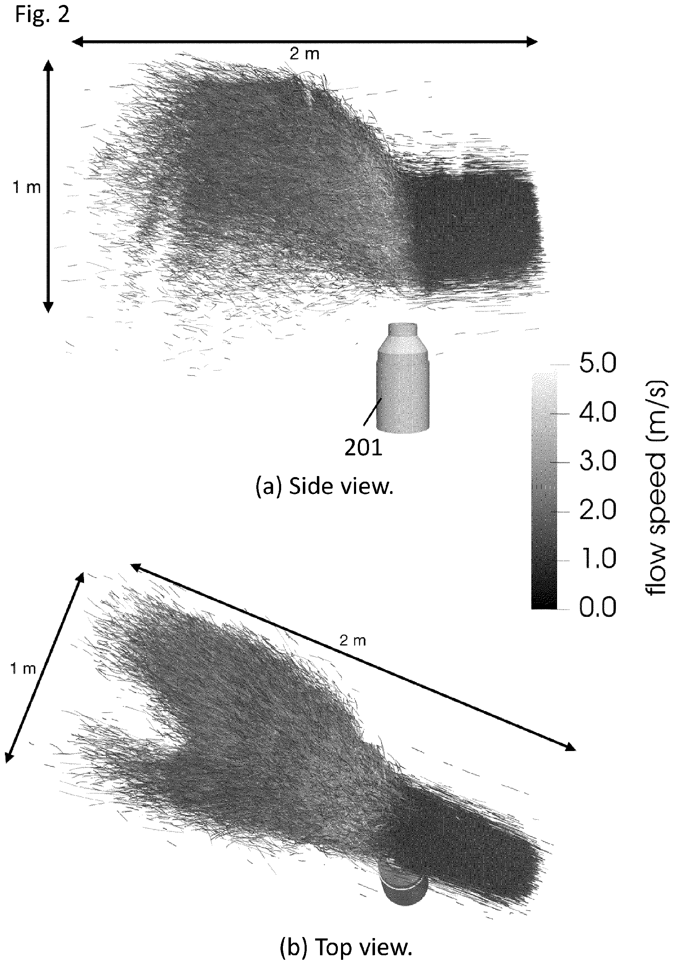

Fig. 2 to Fig. 5 depict results obtained from the method.

In Fig. 2 the trajectories of the air flow of an air purifier 201 are shown. The trajectories have been recorded using the method according to the invention.

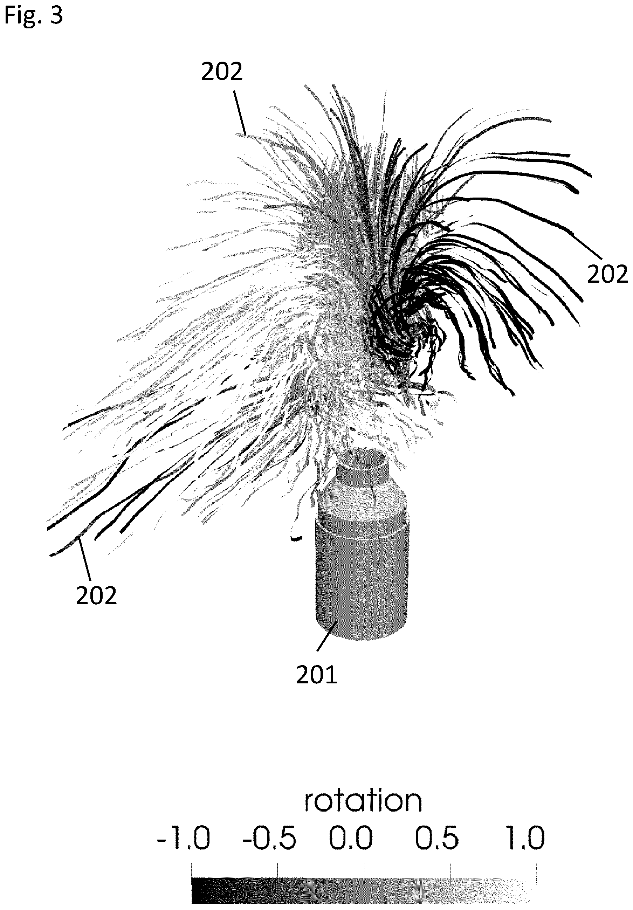

Corresponding to Fig. 2, in Fig. 3 streamlines of the air flow are shown. Said streamlines 202 are obtained by mapping the trajectories to a voxel grid. The gray scale-coding of the streamlines is indicative for a local rotational sense and strength along each trajectory. The viewing direction is upstream and the degree may by normalized to the range between -1 and 1.

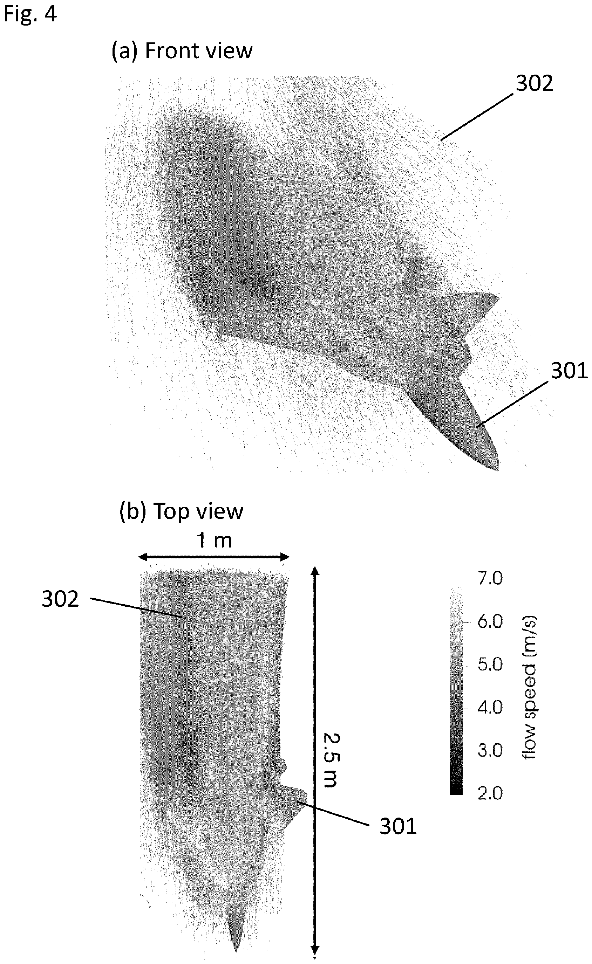

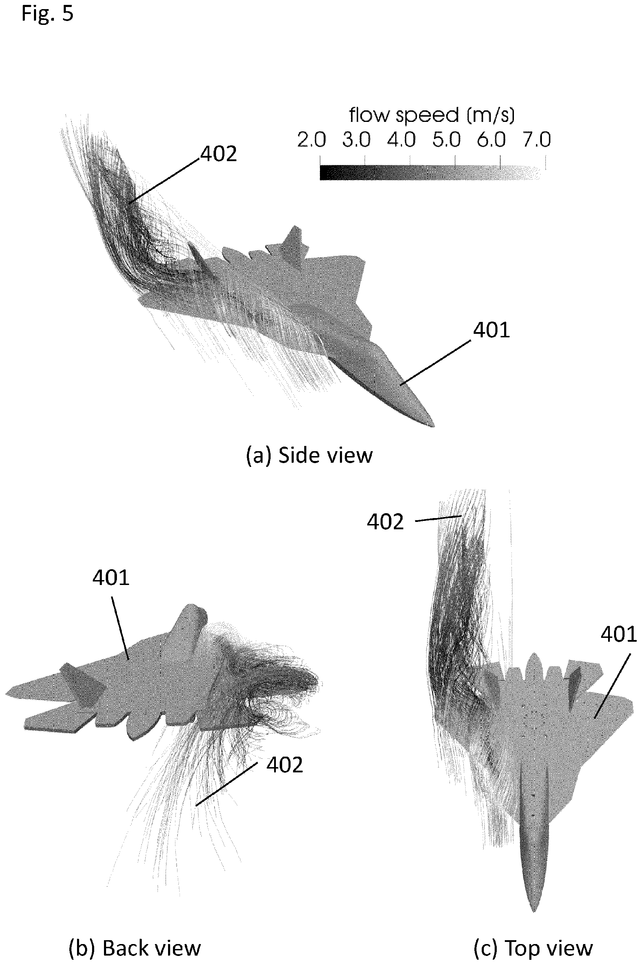

In Fig. 4 velocities of trajectories 302 are gray-scale-coded while testing an aircraft model 301 in a wind tunnel. During recording, the tracer seeding device may be moved between various positions such that various injection sections are probed and trajectories are obtained at high density. Fig. 4 a) shows a perspective front view of the aircraft model 301, wherein Fig. 4 b) visualizes a top view of the aircraft model 301. Similarly, in Fig. 5 a) to c) only portions of the model 401 have been exposed to the tracer flow and evaluated with regard to the tracer flow. The gray-scale of the streamlines 402, obtained from the trajectories by mapping the trajectories to a voxel grid, corresponds to the velocity of the tracer, such that for each tracer the velocity is visualized.

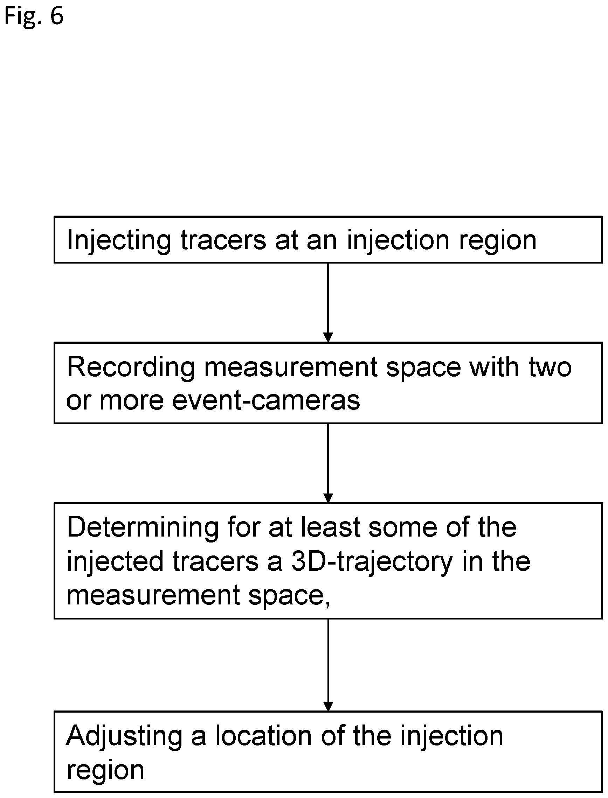

Fig. 6 illustrates the processing flow of the method and the computer program according to the invention by means of a flow chart.

## Claims

1. A method for determining a tracer flow in a measurement space, the method comprising the steps of:

   a) Injecting tracers at a first injection region into the measurement space with a tracer seeding device configured to inject tracers at an adjustable injection region in the measurement space,
   b) Recording the measurement space with two or more event-cameras, wherein each event-camera comprises a plurality of sensors configured to generate output data each time a sensor of the event camera senses a change in light intensity, wherein the output data comprises an information on a position of the sensor that sensed the change in light intensity, and a time of the change in light intensity,
   c) From the data of the event-cameras, determining with a processor for at least some of the injected tracers a trajectory in the measurement space, wherein each trajectory comprises at least an information on a time-resolved three-dimensional position of the tracer, wherein the determination of the trajectories is facilitated in real time,
   d) While executing steps b) and c), adjusting the injection region to at least a second injection region.

2. The method according to claim 1, wherein at least some of the determined trajectories are stored on a non-transitory storage medium.

3. The method according to claim 1 or 2, wherein at least some of the determined trajectories are displayed on a display, particularly while steps b) to c) and/or d) are executed, and/or wherein each trajectory has an associated generation time, wherein displayed trajectories having a generation time that is older than a selected time, are deleted from the display, such that a temporal evolution of the trajectories is displayed.

4. The method according to any of the preceding claims, wherein the injection region is adjusted repeatedly.

5. The method according to any of the preceding claims, wherein the tracer seeding device comprises an injection nozzle at which the tracers are injected in to the measurement space, wherein at least the injection nozzle or the seeding device is handheld and/or hand-guided, such that the injection region is adjustable by moving the nozzle by hand to another region of the measurement space.

6. The method according to any of the claims 1 to 5, wherein the tracer seeding device comprises an injection nozzle at which the tracers are injected in to the measurement space, wherein the injection seeding device is configured to move the nozzle computer-controlled, particularly wherein the tracer seeding device is connected to a control-computer, wherein the control-computer issues control instructions to the tracer seeding device causing the device to move the nozzle.

7. The method according to any of the preceding claims, wherein a density of trajectories is determined by the processor for one or more sub-volumes in the measurement space, and/or wherein the injection region is adjusted such that the density is equal or above a selected density for the one or more sub-volumes, particularly wherein the tracer seeding device is configured to receive control instructions from the control-computer to the effect that the tracer seeding device moves the nozzle to increase the density of the trajectories in the one or more sub-volumes.

8. The method according to any of the preceding claims, wherein the tracers comprise or consist of bubbles filled with air, particularly wherein a flow speed of the flow is higher than 50 km/h on average or at least at the injection region in the measurement space.

9. The method according to any of the preceding claims, wherein the tracers comprise multiple concurrent species of tracers selected from the group consisting of

- tracers in form of liquid droplets and tracers in form of bubbles,
- tracers in form of liquid droplets and tracers in form of solid particles,
- tracers in form of bubbles and tracers in form of solid particles,
- tracers in form of liquid droplets, tracers in form of bubbles, and tracers in form of solid particles.

10. The method according to any of the preceding claims, wherein from the data of each event-camera a two-dimensional location of the tracers in the measurement space is determined by the processor, wherein from the plurality of two-dimensional locations of each tracer and particularly by evaluating a temporal coincidence of the plurality of two-dimensional positions of each tracer, a three-dimensional position of each tracer is determined, particularly by means of a photogrammetry-method.

11. The method according to any of the preceding claims, wherein an object is arranged in the measurement space, wherein trajectories of tracers flowing around the object are determined.

12. The method according to claim 11, wherein the object adjusts its geometry position, pose and/or an aerodynamic characteristic during the recording step b).

13. The method according to claim 11 or 12, wherein before step a) is executed, the object is registered relative to the event-cameras, particularly wherein the object is registered by selectively illuminating, particularly with a light spot, different portions of the object, wherein the event cameras record the illumination portions, wherein the processor determines the three-dimensional positions of the illuminated portions.

14. The method according to claim 13, wherein a 3D-model, such as a CAD-representation of the object is provided to the processor, wherein the processor registers a pose of the 3D-model relative to a representation of the measurement space by processing the illuminated portions, or wherein from the three-dimensional positions of the illuminated portions a three-dimensional representation of the object in the measurement space is generated.

15. A System for executing the method according to one of the preceding claims, wherein the system comprises at least the following components:

- A processor,
- Two or more event-cameras, wherein the event-cameras are connected to the processor,
- One or more tracer seeding devices, wherein each tracer seeding device is configured and arranged to inject tracers into a measurement space, and/or wherein each tracer seeding device comprises one or more nozzles at which the tracers are ejected from the tracer seeding device,

**characterized in that** each tracer seeding device is configured and arranged to subsequently inject the tracers in at least a first and a second injection region, wherein at least said one or more nozzle is movable between the first and the second injection region.

16. The system according to claim 15, wherein at least the one or more nozzles is handheld and hand-guided, such that a person using the tracer seeding device may adjust the injection region by moving the one or more nozzles.

17. The system according to claim 15 or 16, wherein the system further comprises a calibration rig configured to determine a relative position, pose and/or optical imaging parameters of the event-cameras, wherein the calibration rig is an omnidirectional and/or active calibration rig.

18. The system according to one of the claims 15 to 17, wherein the system further comprises an optical marker and/or a designation device to selectively illuminate surface points on objects arranged in a measurement space for spatial registration of the object.

19. A computer program, wherein the computer program comprises computer program code, that when executed on the processor or a computer comprising the processor of the system according to the claims 15 to 18 executes at least the computer-executable method steps of the method according to any of the claims 1 to 14, particularly wherein the computer program is configured to cause the processor or a control-computer to issue control instructions that are then transmitted to the tracer seeding device causing the tracer seeding device to move the injection region according to the control instructions.

## Fig. 1

Fig. 2

201

(a) Side view.

flow speed (m/s)

5.0
4.0
3.0
2.0
1.0
0.0

(b) Top view.

Fig. 3

rotation

-1.0   -0.5   0.0   0.5   1.0

Fig. 4

(a) Front view

302

301

(b) Top view

1 m

302

2.5 m

301

7.0

6.0

5.0

flow speed (m/s)

4.0

3.0

2.0

Fig. 5

(a) Side view

(b) Back view

(c) Top view

Fig. 6

| Injecting tracers at an injection region |

| Recording measurement space with two or more event-cameras |

| Determining for at least some of the injected tracers a 3D-trajectory in the measurement space, |

| Adjusting a location of the injection region |

Europäisches
Patentamt

European
Patent Office

Office européen
des brevets

## EUROPEAN SEARCH REPORT

Application Number

EP 23 17 8320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BORER D ET AL: "Three-dimensional particle tracking velocimetry using dynamic vision sensors", EXPERIMENTS IN FLUIDS, SPRINGER, HEIDELBERG, DE, vol. 58, no. 12, 8 November 2017 (2017-11-08), pages 1-7, XP036372027, ISSN: 0723-4864, DOI: 10.1007/S00348-017-2452-5 [retrieved on 2017-11-08] | 15-19 | INV. G01P5/20 G01F1/704 G01M9/06 |
| A | * abstract * <br> * page 2, left-hand column, paragraph 1-4 * <br> * page 2, left-hand column, last paragraph - right-hand column, paragraph 3; figure 1 * <br> * page 2, right-hand column, last paragraph - page 3, left-hand column, paragraph 1 * <br> * page 3, right-hand column, paragraph 1 - page 5, left-hand column, paragraph 2; figures 3-6 * | 1-14 | |
| A | JP H10 19919 A (MATSUSHITA ELECTRIC IND CO LTD) 23 January 1998 (1998-01-23) <br> * paragraph [0017] - paragraph [0020]; figure 2 * <br> * paragraph [0039] - paragraph [0041]; figure 7 * | 1,15,19 | |
| A | CN 212 459 748 U (GUANGDONG INSTITUTE OF AERONAUTICS AND ASTRONAUTICS EQUIPMENT & TECH) 2 February 2021 (2021-02-02) <br> * paragraph [0045]; figure 1 * <br> * paragraph [0050] - paragraph [0057] * <br> * paragraph [0061]; figure 2 * | 1,15,19 | |

TECHNICAL FIELDS SEARCHED (IPC)

G01P
G01M
G01F
H04N

The present search report has been drawn up for all claims

| Place of search | Date of completion of the search | Examiner |
|---|---|---|
| Munich | 17 November 2023 | Jakob, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**

EP 23 17 8320

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2023

| Patent document cited in search report | | Publication date | Patent family member(s) | Publication date |
|---|---|---|---|---|
| JP H1019919 | A | 23-01-1998 | NONE | |
| CN 212459748 | U | 02-02-2021 | NONE | |

For more details about this annex : see Official Journal of the European Patent Office, No. 12/82

EPO FORM P0459